# EUROPÄISCHE PATENTSCHRIFT

(11) **EP 3 699 251 B1**
(45) Veröffentlichungstag und Bekanntmachung des Hinweises auf die Patenterteilung: **12.07.2023**
(21) Anmeldenummer: 20162703.1
(22) Anmeldetag: 11.05.2011
(51) Int. Cl.: C09K 3/10, B65D 41/04, C08K 5/00

(54) **PVC-FREIE VERSCHLÜSSE**
PVC-FREE CLOSURES
FERMETURES LIBRES DE PVC

(43) Veröffentlichungstag der Anmeldung: 26.08.2020
(62) Teilanmeldung aus: 11719014.0
(73) Patentinhaber: Actega DS GmbH, 28219 Bremen (DE)
(72) Erfinder: MÄNGEL, Dany, 27239 Twistringen (DE)
(74) Vertreter: Maiwald, Walter

(56) Entgegenhaltungen:
- EP-A1- 2 223 984
- WO-A1-2011/060803
- JP-A- 2000 239 481
- US-A1- 2010 006 532
- Actega DS: "THE PVC-FREE SOLUTION; SAFE, SECURE, RELIABLE", , 19. August 2010 (2010-08-19), XP002669289, Gefunden im Internet: URL:http://www.actega.de/fileadmin/ACTEGA/ downloads/ds/provalin/Provalin_Folder_fin. pdf

## Beschreibung

Die vorliegende Erfindung betrifft Zusammensetzungen (Compounds), die als Dichtungsmaterial in Gefäßverschlüssen auch unter Sterilisations-Bedingungen verwendet werden können. Spezieller betrifft die Erfindung solche Zusammensetzungen, die sich für aufdrehbare Gefäßverschlüsse wie z.B. Nockendrehverschlüsse und insbesondere Press-on/Twist-off^{®}-Verschlüsse eignen, und die eine verringerte Migration unerwünschter Substanzen bewirken.

Seit langem werden in der Verpackungsindustrie Dichtungsmaterialien für Gefäßverschlüsse verwendet, die Polyvinylchlorid (PVC) enthalten.

Die Verwendung von PVC-haltigen Zusammensetzungen in Verpackungsmaterialien ist jedoch generell aus vielerlei Gründen nicht mehr erwünscht. So entstehen bei der Verbrennung von Haushaltsabfall aus Halogenkunstoffen säurehaltige Gase, deren Entweichen in die Atmosphäre schädlich ist. Zudem stören schon geringe Mengen PVC das werkstoffliche Recycling von Kunststoffabfällen. Überdies erfordern PVC-basierte Dichtungselemente den Einsatz von Weichmachern, die ggf. in die im Gefäß enthaltenen Nahrungsmittel migrieren können und deshalb aus gesundheitlichen Gründen bedenklich sind.

Aufgabe der vorliegenden Erfindung ist die Bereitstellung einer PVC-freien Zusammensetzung (nachfolgend auch als Polymercompound bezeichnet) für Gefäßverschlüsse, insbesondere für die Verpackung von Nahrungsmitteln. Nahrungsmittel (einschließlich Getränken wie Säfte und dergleichen) werden oft in Gefäße aus Glas oder Kunststoff verpackt, die in vielen Fällen dann einen Schraubdeckel haben. Schraubdeckel steht hier stellvertretend für Gefäßverschlüsse, die im befüllten und verschlossenen Zustand in einem Gewindeeingriff mit dem Gefäß stehen. Zur Öffnung des Gefäßes muss der Verschluss diesem gegenüber verdreht werden, wobei sich die Dichtung des Verschlusses vom Gefäßrand abhebt und das Vakuum im Gefäß aufgehoben wird. Der Verschluss kann durch eine solche Verdrehung vom Gefäß getrennt werden. Die bekannten PVC-haltigen Dichtungsmaterialien haben die hierfür nötigen Verarbeitungs- und Gebrauchseigenschaften. Es ist also zu beachten, dass eine PVC-freie Dichtungsmasse nur dann ein kommerziell interessantes Dichtungsmaterial für Gefäßverschlüsse darstellt, wenn die PVC-freie Dichtungsmasse ganz spezifische physiko-chemische Eigenschaften aufweist, die denen von PVC-haltigen Dichtungsmaterialien nicht nachstehen.

Stülpdeckel (z.B. für Senfgläser) bzw. Einmaldeckel, z.B. crimp-on Deckel, die auf Glasbehältern mit großen Durchmessern verwendet werden, sind ebenfalls Verschlüsse im Sinne dieser Erfindung.

Speziellere Anforderungen umfassen beispielsweise folgende Aspekte:
- Die stoffliche Zusammensetzung soll so gewählt sein, dass unerwünschte Substanzen vermieden werden. Daher soll die Dichtungsmasse solche Substanzen nicht enthalten, die als gesundheitlich bedenklich eingestuft werden, insbesondere Weichmacher wie z.B. Phthalate; Semicarbazid und dessen Quellen, insbesondere ADC und OBSH; 2-Ethylhexansäure und deren Quellen; zinnorganische Verbindungen; primäre aromatische Amine; Bisphenole, Nonylphenol; BADGE; Photoinitiatoren; perhalogenierte Verbindungen; Melamin.

Für den Fall, daß Bisphenol-A und Melamin vermieden werden soll, werden für den Gefäßverschluss Lacke eingesetzt, die solche Substanzen nicht enthalten. Dann sollte das Dichtungsmaterial so zusammengesetzt sein, dass mit solchen Lacken eine dauerhafte Verklebung erreicht wird.

Die stoffliche Zusammensetzung sollte so gewählt sein, dass das Dichtungsmaterial beim Einsatz auch anspruchsvollen Anforderungen genügt.

So muss das Dichtungsmaterial unterSterilisierungsbedingungen verwendbar sein, also einer Sterilisierung (generell oberhalb 100 °C, oft oberhalb 105 °C oder oberhalb 110 °C, oder sogar oberhalb 120 °C, bis herauf zu 132 °C) standhalten.

Für manche Einsatzzwecke sollte das Dichtungsmaterial eine Barrierefunktion haben, also das Eindringen unerwünschter Substanzen in das Gefäß verringern oder verhindern.

Für spezielle Anwendungen sollte es möglich sein, das Dichtungsmaterial mit absorbierenden Zusätzen (z.B. Sauerstoffabsorber) oder Scavenger-Substanzen auszustatten.
- Das Dichtungsmaterial muss die benötigten Verarbeitungseigenschaften aufweisen.

Grundsätzlich muss es sich thermisch ausreichend erweichen lassen, um (insbesondere für Extrusion mit anschließender Verstempelung bzw. Formpressen aber auch im Spritzgussverfahren) auf üblichen Verarbeitungsmaschinen einsetzbar zu sein.

Es muss dennoch nach der Einbringung in den Gefäßverschluss und Abkühlung auf die gewünschte Anwendungstemperatur (meist RT, aber gegebenenfalls auch bei niedrigeren Temperaturen, z.B. im Kühlregal) die erforderlichen Dichtungseigenschaften haben.

Für kleine Gefäßverschlüsse muss sich das Dichtungsmaterial auch vollflächig einbringen lassen.

Für PT-Kappen (Press-on Twist-off^{®} Verschlüsse) muss das Dichtungsmaterial sowohl die Dichtung als auch das Innengewinde der Kappe ausbilden, und muss sich daher (als sog. "konturierter Ring") sowohl auf die Innenfläche als auch die Schürze der Kappe auftragen lassen, und beim Aufpressen der Kappe die Gewindeelemente ausbilden können.

Für manche Anwendungen sollte das Dichtungsmaterial sich "out shell", d. h. außerhalb des Verschlusses zur Dichtungseinlage formen lassen, die dann als fertiger Dichtungsring oder dergleichen in den Gefäßverschluss eingesetzt wird.

Das Dichtungsmaterial soll sich insbesondere für Metall-Verschlüsse, und Metall-Kunststoffverbünde, eignen, die gegebenenfalls innenlackiert sind, es soll sich aber auch für Kunststoff-Verschlüsse eignen.
- Das Dichtungsmaterial muss sich für übliche Lebensmittel-Verpackungen eignen.

Die Dichtungseinlage muss einer Nachbehandlungbei Gegendruck und Evakuierung standhalten; falls nötig, muss sie eine Vakuums-Retention und gegebenenfalls Barriereeigenschaften aufweisen.

Die Dichtungseinlage soll sich für übliche Gefäße aus Metall, Kunststoff, Glas usw. eignen.

Im Kontakt mit dem Füllgut, insbesondere bei fetthaltigen Lebensmitteln, alkoholischen Getränken und anderen Produkten mit (im Vergleich mit Wasser) lipophilem Charakter soll die Dichtungseinlage keine bzw. möglichst wenig Komponenten an das Füllgut abgeben.

Die Dichtungseinlage muss ausreichend niedrige Aufdrehwerte zeigen, um den Gefäßverschluss (gegebenenfalls bei Kühlung) mit angemessener Kraft entfernen zu können. Gleichzeitig muss die Dichtung über die vorgesehene Lebensdauer (Mindesthaltbarkeit) des Lebensmittels ihre Dichtungswirkung zeigen.

Die der vorliegenden Erfindung zu Grunde liegenden Aufgaben werden durch die in den unabhängigen Ansprüchen definierten PVC-freien Zusammensetzungen gelöst. Vorteilhafte Ausgestaltungen sind in Unteransprüchen definiert.

Generell werden erfindungsgemäß Polymercompounds als Dichtungsmaterial oder Dichtungsmasse eingesetzt. Unter einem Compound wird dabei ein Stoffgemisch verstanden, das neben wenigstens einem Polymer weitere Substanzen umfasst. Dabei kann es sich z.B. um andere Polymere, Streckmittel, Gleitmittel, Antioxidantien, Pigmente und andere Zusatzstoffe handeln.

Die erfindungsgemäßen PVC-freien Zusammensetzungen können durch Erwärmung ausreichend fließfähig gemacht werden. Nur so kann die Dichtungsmasse durch Extrusion oder ein ähnliches Verfahren im Bereich des zu erzeugenden Dichtungselementes auf den Gefäßverschluss-Rohling aufgetragen werden.

Nachfolgend kann die auf der Innenseite des Gefäßverschlusses aufgebrachte PVC-freie Zusammensetzung mechanisch zum gewünschten Dichtungselement geformt werden. Nach Abkühlung kann die aufgetragene Zusammensetzung ihre Form beibehalten und im Schließzustand dichtend an der Öffnung des mit dem Gefäßverschluss zu verschließenden Gefäßes anliegen.

Dabei kann die PVC-freie Zusammensetzung vorzugsweise bei der Herstellung beliebiger Gefäßverschlüsse verwendet werden, wie zum Beispiel zur Herstellung von Dichtungen in Nockendrehverschlüssen, Schraubdeckeln, drehbare Kronkorken, Flaschenschraubverschlüssen und Press-on Twist-off^{®} Verschlüssen.

Die erfindungsgemäße PVC-freie Zusammensetzung ist also insbesondere ein für Gefäßverschlüsse geeignetes Dichtungsmaterial, welches
- einfach zu verarbeiten ist,
- in der industriellen Produktion schnelle Durchsätze ermöglicht,
- beiSterilisationsbedingungen einsetzbar ist,
- selbst bei fetthaltigen Füllgütern gesundheitlich unbedenklich ist,
- weitestgehend oder völlig auf unvernetzten Polymeren basiert und ganz oder jedenfalls im wesentlichen frei von gesundheitlich bedenklichen Substanzen (wie Weichmachern und dergleichen) ist,
- kostengünstig ist, und/oder
- die Herstellung von Gefäßverschlüssen erlaubt, die im Schließzustand eine Gasbarrierewirkung, eine Überdruckventilwirkung und/oder eine Vakuumretention zeigen.

Generell umfasst ein erfindungsgemäßes Dichtungsmaterial ein Gemisch chemisch unterschiedlicher Komponenten, das wenigstens zwei verschiedene Polymere und weitere Bestandteile wie Gleitmittel, Stabilisatoren und gegebenenfalls weitere Bestandteile umfasst, die zur Einstellung der gewünschten Gebrauchseigenschaften dienen.

Ein spezielles Anwendungsgebiet der Erfindung sind die z. B. für Babynahrung sehr beliebten Press-on Twist-off^{®} Verschlüsse.

Definitionsgemäß handelt es sich bei einem "*Press-on Twist-off*^{®} *Verschluss"* um einen Verschluss, der beim erstmaligen Aufbringen auf das zu verschließende Gefäß aufgedrückt wird (*"Press-on*"), beim Entfernen jedoch gedreht werden muss ("*Twist-off*")*.* Dies steht im Gegensatz zu Schraubverschlüssen, die sowohl beim Verschließen des Gefäßes als auch beim Öffnen des Gefäßes einer Drehbewegung bedürfen.

Das Grundprinzip von Press-on Twist-off^{®} Gefäßverschlüssen ist zum Beispiel in der 1966 publizierten Patentschrift US 3,270,904 beschrieben:
An den Seitenwänden des Gefäßverschlusses wird eine Kunststoffmasse aufgebracht, die sich beim Verschließen des Gefäßes derart verformt, dass Gewindegänge gebildet werden, welche mit den Gewindeelementen des Gefäßes zusammenwirken (vgl. Spalte 2, Zeile 16 von US 3,270,904). Im Gegensatz zu Schraubkappen und Nocken-Drehverschlüssen hat der (metallene) Grundkörper des Gefäßverschlusses selbst kein Gewinde; das Gewinde wird ausschließlich vom Polymermaterial der Dichtungsmasse gebildet. Auf Grund der beim Aufpressen des Gefäßverschlusses gebildeten Gewindegänge wird eine Drehbewegung zur Entfernung des Gefäßverschlusses zwingend notwendig. Die auf der Innenseite des Gefäßverschlusses aufgebrachte Kunststoffmasse erfüllt bei einem Press-on Twist-off^{®} Gefäßverschluss (in US 3,270,904 als Press-on Turn-off Cap bezeichnet) also sowohl eine Dichtungs- wie auch eine Haltefunktion (vgl. die in Spalte 2, Zeilen 4-10 von US 3,270,904 beschriebene "*dual function*").

Bisher werden immer noch auf PVC basierende Compounds für solche Gefäßverschlüsse industriell verwendet.

Obschon die grundsätzliche Funktionsweise von Press-on Twist-off^{®} Gefäßverschlüssen seit Jahrzehnten bekannt ist, stellt deren kostengünstige (d.h. schnelle) Herstellung für die Verpackungsindustrie bis heute eine beachtliche Herausforderung dar. Dem Fachmann stellen sich dabei insbesondere folgende Aufgaben:
- Die auf die Innenseite des Gefäßverschlusses aufgetragene Dichtungsmasse kommt zwingend mit den sich im zu verschließenden Gefäß befindlichen Nahrungsmitteln in Kontakt. Angesichts dessen, dass die Migration von Bestandteilen der Dichtungseinlage des Gefäßverschlusses in das Nahrungsmittel nicht nur unerwünscht, sondern auch durch gesetzliche Bestimmungen stark reglementiert ist (vgl. 1. Absatz auf Seite 15 der Beschreibung der vorliegenden Anmeldung), ist die Auswahl der im Prinzip denkbaren Dichtungsmaterialien von vornherein eingeschränkt. Ein Ersatz für PVC-Compounds wird seit Jahren vergeblich gesucht.

Für Babynahrung eignen sich bevorzugt Melamin-freie Verpackungen. Oft müssen die entsprechenden Gefäßverschlüsse mit Innen-Lackierungen versehen werden, die dann Melamin-frei sein müssen. Geeignet sind z.B. Polyester-Lacke. Das Dichtungsmaterial muss dann auf solchen Lacken ausreichend haftfähig sein.
- Das auf der Innenseite der Deckplatte angebrachte Dichtungsmaterial dient der hermetischen Abdichtung des zu verschließenden Gefäßes, d.h. hat zwingend eine Dichtungsfunktion. Im Gegensatz dazu dient das an den Seitenwänden des Gefäßverschlusses angebrachte Dichtungsmaterial der Zusammenwirkung mit den Gewindeelementen, insbesondere beim Aufdrehen, und hat somit überwiegend eine Hebelfunktion (vgl. Fig. 2 von US 3,270,904). Angesicht dieser unterschiedlichen Funktionen würde es sich anbieten, zwei unterschiedliche Materialen mit auf die jeweilige Funktion zugeschnittenen Materialeigenschaften zu verwenden. Eine solche Ausführungsform wäre aber nur unter großem Aufwand herstellbar und ist deshalb unter wirtschaftlichen Gesichtspunkten gänzlich uninteressant. Die gewünschten hohen Produktionsgeschwindigkeiten werden nur dann erreicht, wenn das Material auf der Innenseite der Deckplatte und an den Seitenwänden des Gefäßverschlusses dasselbe ist.
- Für die Dichtungsfunktion wird ein zumindest teilweise elastisches Material benötigt, das die erforderliche Anschmiegung an den Gefäßrand, die Vakuums-Retention, gegebenenfalls auch eine Barrierewirkung gegenüber dem Eintritt von Schadstoffen, Sauerstoff und dergleichen bewirken kann.
- Im Gegensatz dazu wird für die Haltefunktion ein eher steifes/hartes Material benötigt, da der Gefäßverschluss ansonsten ohne Drehbewegung abgehoben werden könnte oder die Gewindeelemente des Verschlusses den Aufdrehkräften nicht standhalten. Die Verwendung desselben Materials sowohl für die Haltefunktion wie auch für die Dichtfunktion stellt für den Fachmann somit eine große Herausforderung dar.
- Das Dichtungsmaterial muss sich, insbesondere durch Stempelung oder Einbringung durch Spritzguß, im Verschluss-Rohling in die benötigte Form bringen lassen. Dabei muss nicht nur der Dichtungsring ausgebildet werden, der im verschlossenen Zustand des Behälters dichtend am Behälter-Öffnungsrand anliegt. Gleichzeitig muss auch das Material, welches beim Aufpressen des Verschlusses dessen Innengewinde ausbildet, an der inneren Seitenwand (Schürze) des Verschlusses verteilt werden. Dazu muss das ausreichend erwärmte, fließfähige Compound bei der Stempelungstemperatur seitlich um den Stempel herum gleichmäßig in den Raum zwischen dem Stempel und der Seitenwand des Verschlusses fließen können.
- Die Wahl des passenden Dichtungsmaterials wird weiterhin durch die erforderlichen thermischen Eigenschaften erschwert. Beim Aufbringen des Deckels muss das Dichtungsmaterial genügend verformbar sein, um die Gewindeelemente des zu verschließenden Behälters auszubilden. Dennoch muss das Dichtungsmaterial Pasteurisier- und/oder Sterilisationsbedingungen aushalten und darf deshalb z. B. nur eingeschränkt fließfähig sein.

Es zeigt sich unmittelbar, dass die Bereitstellung eines PVC-freien Press-on Twist-Off^{®} Gefäßverschlusses den Fachmann vor eine deutlich schwierigere Aufgabe stellt, als die Bereitstellung eines anderen Gefäßverschlusses.

Im Stand der Technik sind für bestimmte Verschlüsse schon PVC-freie Zusammensetzungen beschrieben worden, die aber nicht industriell zum Einsatz gelangt sind.

Zum Beispiel offenbart WO 2009/059788 eine Zusammensetzung mit einem Ethylen-Okten-Copolymer, im Gemisch mit Ethylen-Vinyl-Acetat (EVA) und Polypropylen (PP). In der Praxis haben sich jedoch diese Compounds mit hohen EVA-Anteilen (hier: 40 %) als weniger bevorzugt erwiesen. Die Erfindung umfasst vorzugsweise Compounds mit EVA-Anteilen von weniger als 40 %, und besonders bevorzugt Compounds, die kein EVA enthalten.

Aus der Internationale Patentanmeldung PCT/EP2009/008273 ist eine Zusammensetzung bekannt, die zwei Polymere enthält, nämlich ein Ethylen-Okten-Block-Copolymer (39.1 %) und ein Ethylen-Okten-Random-Copolymer (60 %) mit einer Shore A-Härte von 85 bei einer Shore D-Härte von 25.

Auch diese Rezeptur erfüllt noch nicht alle Anforderungen, insbesondere bei Press-on Twist off^{®}-Verschlüssen, die einer pasteurisierenden oder sogar sterilisierenden Nachbehandlung des gefüllten und verschlossenen Gefäßes standhalten können. Die Erfindung stellt demgegenüber Zusammensetzungen vor, mit denen sich auch anspruchsvolle Anforderungen wie z.B. Dichtungen für Press-on Twist-off^{®} Verschlüsse, deutlich besser erreichen lassen.

Im Kontext der vorliegenden Erfindung bezeichnet der Ausdruck "*PVC-freie Zusammensetzung"* eine Zusammensetzung, die weniger als 1 Gew.-%, vorzugsweise weniger als 0,5 Gew.-%, noch bevorzugter weniger als 0,1 Gew.-% oder weniger als 1 Gew.-‰ und am bevorzugtesten (innerhalb der analytischen Bestimmungsgrenzen) gar kein PVC umfasst (jeweils bezogen auf das Gesamtgewicht der PVC-freien Zusammensetzung). Im Kontext der vorliegenden Erfindung werden als "*PVC-freie Zusammensetzungen"* nur diejenigen Zusammensetzungen betrachtet, die als Dichtungsmasse in Gefäßverschlüssen verwendet werden können. So ist beispielsweise ein Schmelzklebstoff oder ein Rein-Polymer im Kontext der vorliegenden Erfindung keine "*PVC-freie Zusammensetzung",* auch wenn kein PVC darin enthalten ist.

Im Kontext der vorliegenden Erfindung bezeichnet der Ausdruck "*Kunststoff*" ein Material, das mindestens ein synthetisches oder halbsynthetisches Polymer umfasst.

Im Kontext der vorliegenden Erfindung bezeichnet der Ausdruck "*Blockcopolymer*" ein Copolymer, das aus längeren Sequenzen oder Blöcken jedes Monomers besteht (z.B. AAAAAAAAABBBBBBBBBBBB...). Je nach Anzahl der Blöcke spricht man auch von Diblock-, Triblock-, etc. Copolymeren.

Im Kontext der vorliegenden Erfindung bezeichnet der Ausdruck "*Elastomerlegierung*" eine Mischung, die eine Kunststoffmatrix und ein, ggf. darin dispergiertes, Elastomer umfasst. Bei der Kunststoffmatrix kann es sich z.B. um einen Thermoplasten handeln.

Im Kontext der vorliegenden Erfindung bezeichnet der Ausdruck "*Thermoplast*" einen Kunststoff, der sich durch Erwärmen plastisch verformen lässt, sofern die durch Erwärmen erreichte Temperatur innerhalb eines materialspezifischen Temperaturbereichs liegt. Bis zu einer materialspezifischen Obergrenze kann ein Thermoplast reversibel erwärmt und abgekühlt werden, ohne dass eine thermische Zersetzung stattfindet.

Im Kontext der vorliegenden Erfindung bezeichnet der Ausdruck "*Elastomer*" einen formfesten Kunststoff, der sich typischerweise bei Raumtemperatur elastisch verformen lässt. Typischerweise liegt der Glasübergangpunkt eines Elastomers unterhalb der Raumtemperatur. Typischerweise lassen sich Elastomere als solche nicht schmelzen.

### Detaillierte Beschreibung der Erfindung

Generell umfassen die erfindungsgemäßen Zusammensetzungen wenigstens zwei chemisch und physikalisch unterschiedliche Polymere und zusätzlich
- ein drittes, von beiden genannten Polymeren chemisch und physikalisch verschiedenes Polymer;
- die Eignung für eine sterilisierende Nachbehandlung (bei Temperaturen oberhalb 100°C und bis zu 132°C, und/oder
- eine Shore A-Härte zwischen 40 und 95, vorzugsweise 45 bis 90, mehr bevorzugt zwischen 50 und 85 (insbesondere zwischen 70 und 85) sowohl bei 30 min/20°C als auch bei 24h/20°C und einen Druckverformungsrest DVR (in Prozent, analog ASTM D 395-97, Methode B bei 22h/70°C) zwischen 40 und 95, spezieller zwischen 50 und 90, bevorzugt zwischen 50 und 80, besonders bevorzugt zwischen 50 und 70 und speziell zwischen 50 und 60. Dabei ist es erfindungsgemäß erwünscht, dass der DVR bei 22h/20°C unterhalb 20 liegt und bei 22h/100°C unterhalb 95, speziell unterhalb 90 und besonders bevorzugt zwischen 80 und 90 liegt.

In manchen bevorzugten Ausführungsformen ist die erfindungsgemäße PVC-freie Dichtungsmasse eine Mischung, die mindestens drei unterschiedliche Kunststoffe umfasst, welche nachfolgend als Kunststoff 1, Kunststoff 2 und Kunststoff 3 bezeichnet werden.

Die erfindungsgemäße PVC-freie Zusammensetzung umfasst dabei vorzugsweise:
- Kunststoff 1
- Kunststoff 2
- Kunststoff 3
- optional Kunststoff 4,
- mindestens einen flüssigen Bestandteil
- optional mindestens ein Gleitmittel
- optional mindestens einen Stabilisator,
- optional mindestens ein Pigment, und/oder
- optional mindestens einen Füllstoff

Wenigstens ein Kunststoff ist in dieser Ausführungsform ein im Wesentlichen nicht elastisches, thermoplastisches Polymer. Ein typisches Beispiel ist Polypropylen (PP).

Die anderen Kunststoffe sind dann SEBS und LLDPE.

In einer bevorzugten Ausführungsform der Erfindung umfasst die erfindungsgemäße Zusammensetzung keine Compounds, deren polymere Hauptbestandteile aus 39 - 40 % Ethylen-Okten-Block-Copolymer und 45 - 60 % Ethylen-Okten-Random-Copolymer bestehen, insbesondere wenn zusätzlich ein Gehalt von bis zu 10 % PP vorliegt.

In bestimmten Ausführungsformen der Erfindung ist der Polymer-Hauptbestandteil ein thermoplastisches Elastomer oder ein elastischer Thermoplast, insbesondere ausgewählt aus SEBS, Propylen-basierenden Elastomeren und Terpolymeren.

Eine bevorzugte Ausführungsform der vorliegenden Erfindung ist schematisch in Abbildung 1 dargestellt.

Die Wahl der erfindungsgemäßen Kunststoffen 1, 2 und 3 kann je nach Anwendungsbereich zum Teil erheblich differieren. Dennoch gilt unabhängig von der Art des Gefäßverschlusses mindestens eine der nachfolgend aufgeführten Beziehungen zwischen den Kunststoffen 1, 2 und 3.

In bevorzugten Ausführungsformen der Erfindung gelten mehrere oder gar alle der folgenden Beziehungen:
Mindesttemperatur, bei der eine plastische Verformung möglich ist:
   Kunststoff 1 < Kunststoff 3 < Kunststoff 2
Glastemperatur (T_{g}),
   Kunststoff 1 > Kunststoff 3 > Kunststoff 2
Shore A Härte,
   Kunststoff 1 > Kunststoff 3 > Kunststoff 2
Elastizitätsmodul
   Kunststoff 1 > Kunststoff 3 > Kunststoff 2
Druckverformungsrest (22h / 70 °C)
   Kunststoff 1 > Kunststoff 3 > Kunststoff 2
*Wahl von Kunststoff 1, Kunststoff 2 und Kunststoff 3*

Kunststoff 1, Kunststoff 2 und Kunststoff 3 sind vorzugsweise bekannte, handelsübliche Kunststoffe. Anhand obiger Angaben zu Druckverformungsrest, Shore A Härte, Glastemperatur etc. ist der Fachmann in der Lage, geeignete, kommerziell erhältliche Kunststoffe, Polymere, Polymerlegierungen etc. zu identifizieren.
Als Kunststoff 1 kommen zum Beispiel folgende Handelsprodukte in Frage: Metallocen-katalysiertes Polypropylen, wie etwa Metocene^{®} HM
Als Kunststoff 2 kommen unter anderem folgende Handelsprodukte in Frage: SEBS, z.B. Taipol^{®} oder Kraton^{®}

Die Gewichtsanteile von Kunststoff 1, 2 und 3 in der erfindungsgemäßen PVC-freien Zusammensetzung können je nach Verwendung variieren.

Erfindungsgemäss liegt der Gewichtsanteil von **(co-)PP** in einem Bereich von 10 Gew.-% bis 50 Gew.-%, bezogen auf das Gesamtgewicht der erfindungsgemäßen PVC-freien Zusammensetzung.

Erfindungsgemässliegt der Gewichtsanteil von **SEBS**in einem Bereich von 20 Gew.-% bis 50 Gew.-%, bezogen auf das Gesamtgewicht der erfindungsgemäßen PVC-freien Zusammensetzung.

Erfindungsgemäss liegt der Gewichtsanteil von **LLDPE** bei bis zu 25 % in einem Bereich von 10 Gew.-% bis 50 Gew.-%, bezogen auf das Gesamtgewicht des Dichtungsmaterials.

Der Fachmann versteht, dass die Summe der Gew.-% von Kunststoff 1, Kunststoff 2 und Kunststoff 3 höchstens 100-Gew.-% betragen kann. Beträgt die Summe der Gew.-% von Kunststoff 1, Kunststoff 2 und Kunststoff 3 weniger als 100-Gew.-% umfasst die PVC-freien Zusammensetzung weitere Bestandteile.

Weiterhin enthält die erfindungsgemäße Zusammensetzung zu 35% einer Ölkomponente, vorzugsweise Weißöl. Solche Compounds können sterilisierbar sein, eignen sich aber weniger für fettige Füllgüter.

Weiterhin kann die erfindungsgemäße Zusammensetzung Gleitmittel umfassen. Zweck des Gleitmittels ist die Verringerung des Aufdrehwiderstands.

Daneben sind gegebenenfalls übliche Komponenten wie Stabilisatoren, Pigmente, Füllstoffe und dergleichen in üblichen kleinen Anteilen vorgesehen

## Patentansprüche

1. Gefässverschluss aus Metall oder Kunststoff für ein Gefäß zur Aufnahme von Nahrungsmitteln oder Getränken, mit einer Dichtungseinlage aus einem Dichtungsmaterial, das wenigstens ein Polymer im Gemisch mit weiteren Substanzen umfasst, wobei
- der Gefäßverschluss als Schraubdeckel für eine Flasche, ein Glas oder dergleichen ausgebildet ist,
- und im Schließzustand eine Vakuumsretention zeigt.
- das Dichtungsmaterial kein PVC und im Wesentlichen keine vernetzten Polymere enthält;
- das Dichtungsmaterial bezogen auf das Gesamtgewicht des Dichtungsmaterials, zwischen 20% und 50% SEBS, sowie bis zu 25% LLDPE; zwischen 10% und 50% PP, und/oder zwischen 10% und 50% PP - basierendes Elastomer sowie wenigstens eine Ölkomponente umfasst,
- der Gehalt an der Ölkomponente bis zu 35 % beträgt,und
- die Dichtungseinlage sterilisierbar ist,

2. Gefässverschluss gemäß Anspruch 1, bei dem die Dichtungseinlage im Gefäßverschluss so angeordnet ist, dass sie im Schließzustand dichtend an der Öffnung des Gefäßes anliegt, wobei der Gefäßverschluss vorzugsweise aus Metall besteht.

3. Gefässverschluss nach einem der Ansprüche 1 oder 2, **dadurch gekennzeichnet, dass** der Gefäßverschluss einem Innendurchmesser der Gefäßöffnung von mehr als 2,5 cm, vorzugsweise mehr als 3 cm, mehr bevorzugt von mindestens 3,5 cm, besonders bevorzugt von mindestens 3,8 cm und ggf. von mehr als 4 cm entspricht.

4. Gefässverschluss nach einem der Ansprüche 1 bis 3, bei dem der Gefäßverschluss ein Nockendrehverschluss, ein Press-on Twist-off^{®} Verschluss, ein Stülpdeckel, ein crimp-on bzw. Einmalverschluss (z.B. Pano AK) oder ein anrollbarer Metallverschluss ist.

5. Gefässverschluss nach einem der vorstehenden Ansprüche, **dadurch gekennzeichnet, dass** die Dichtungseinlage als Inneneinlage auf der Innenfläche und bei Press-on Twist-off^{®} Verschlüssen auch auf der Schürze des Gefäßverschlusses ("konturierter Ring") ausgebildet ist.

6. Gefässverschluss nach Anspruch 5, **dadurch gekennzeichnet, dass** die Dichtungseinlage ringförmig oder kreisscheibenförmig ausgebildet ist.

7. Gefässverschluss nach einem der vorstehenden Ansprüche, **dadurch gekennzeichnet, dass** das Dichtungsmaterial so ausgebildet ist, dass die Dichtungseinlage bei einer Wärmebehandlung (mit oder ohne Druck) des gefüllten Gefäßes zwecks Sterilisation (oberhalb 98°C, bevorzugt oberhalb 105°C, besonders bevorzugt oberhalb 120°C und speziell zwischen 121°C und 132°C) einsetzbar ist.

8. Gefässverschluss nach einem der vorstehenden Ansprüche, **dadurch gekennzeichnet, dass** der Gefäßverschluss im Schließzustand eine Gas-Barrierewirkung und/oder eine Überdruckventilwirkung aufweist

9. Gefässverschluss nach einem der Ansprüche 1 bis 8, bei dem das Dichtungsmaterial so gewählt ist, dass der Verschluss die Bestimmungen der Verordnung (EG) 1935/2004 erfüllt.

10. Gefässverschluss nach einem der Ansprüche 1 bis 9, bei dem das Dichtungsmaterial so gewählt ist, dass der Verschluss die Bestimmungen der Verordnung (EG) 2023/2006 erfüllt.

11. Gefässverschluss nach einem der Ansprüche 1 bis 10, bei dem das Dichtungsmaterial so gewählt ist, dass der Verschluss die Bestimmungen der EC-Richtlinie 2002/72/EG erfüllt.

12. Gefässverschluss nach einem der Ansprüche 1 bis 11, bei dem das Dichtungsmaterial so gewählt ist, dass der Verschluss die Bestimmungen der Verordnung (EU) 10/2011 erfüllt.

13. Gefässverschluss nach einem der vorstehenden Ansprüche, wobei das Dichtungsmaterial nicht mehr als 50%, vorzugsweise nicht mehr als 35%, insbesondere nicht mehr als 20% von bei Anwendungstemperatur flüssigen Bestandteilen enthält.

14. Gefässverschluss nach einem der vorstehenden Ansprüche, bei dem das Dichtungsmaterial keine Weichmacher, insbesondere keine Phthalate, enthält.

15. Gefässverschluss einem der vorstehenden Ansprüche, bei dem das Dichtungsmaterial beim Druckverformungstest analog ASTM D395-97 Methode B bei 22 h/70°C einen Druckverformungsrest (DVR) von 50-70% zeigt.

16. Gefässverschluss nach einem der vorstehenden Ansprüche, **dadurch gekennzeichnet, dass** das Dichtungsmaterial zwischen 20 und 60 % wenigstens eines Block-Copolymers enthält, wobei das Block-Copolymer vorzugsweise ein Copolymer von Ethylen mit einem C3-C20-alpha-0lefin, gegebenenfalls in Kombination mit anderen ungesättigten Monomeren, ist.

17. Gefässverschluss nach Anspruch 16, **dadurch gekennzeichnet, dass** das Block-Copolymer aus Ethylen und einem Alken, insbesondere ausgewählt aus Propen, Buten, Hexen und Okten, und besonders bevorzugt Okten ausgebildet ist.

18. Gefässverschluss nach Ansprüchen 15 bis 17 **dadurch gekennzeichnet, dass** das Dichtungsmaterial zwischen 0, 1 % und 80%, vorzugsweise zwischen 20 und 60%, besonders bevorzugt zwischen 40 und 50% wenigstens eines random-Copolymers enthält, wobei das random-Copolymer vorzugsweise ein lineares Interpolymer von Ethylen und einem C3-C20-alpha-Olefin oder ein branched-Interpolymer von Ethylen und einem C3-C 20-alpha-Olefin ist.

19. Gefässverschluss nach Anspruch 18, **dadurch gekennzeichnet, dass** das random-Copolymer eine Dichte von 0,80 bis 1, 1 g/cm 3 und vorzugsweise einen Schmelzindex (MFI) von 0.15 g/10 min bis 100 g/ 10 min aufweist.

20. Gefässverschluss nach einem der Ansprüche 15 bis 19, **dadurch gekennzeichnet, dass** das random-Copolymer zwei Alkene, insbesondere ausgewählt aus Ethylen, Propen, Buten, Hexen und Okten, umfasst.

21. Gefässverschluss gemäß Anspruch 20, bei dem wenigstens ein Co-Polymer mittels Metallocenkatalyse hergestellt wurde.

22. Gefässverschluss nach einem der Ansprüche 15 bis 21, **dadurch gekennzeichnet, dass** die Zusammensetzung bis zu 50%, insbesondere bis zu 25% Polyolefine, vorzugsweise HDPE und/oder PP bzw. (co)PP, enthält, und vorzugsweise wenigstens ein Polymer auf Propylenbasis umfasst, welches einen Schmelzbereich oberhalb 90 °C hat.

23. Gefässverschluss nach Anspruch 1 bei dem das Dichtungsmaterial zwischen 5% und 70% SEBS und zwischen 10% und 50% eines Propylen-(co)-Polymers enthält.

24. Gefässverschluss nach Anspruch 22 oder Anspruch 23, bei dem das Dichtungsmaterial Metallocen-katalysiertes PP oder Homo-PP umfasst.

25. Gefässverschluss gemäß einem der vorstehenden Ansprüche, bei dem das Dichtungsmaterial bezogen auf sein Gesamtgewicht weniger als 30 Gew.-%>, vorzugsweise weniger als 20 Gew.-%>, mehr bevorzugt weniger als 10 Gew.-%>, besonders bevorzugt weniger als 5 Gew.-% und speziell gar kein vernetztes Polymer enthält.

26. Gefässsverschluss nach einem der vorstehenden Ansprüche mit einem Gehalt an einem Polyester im Dichtungsmaterial.

27. Dichtungseinlage für einen Gefässverschluss, umfassend ein Dichtungsmaterial gemäß einem der Ansprüche 1 bis 26.

28. Gefäß, insbesondere Schraubdeckelglas, für Getränke oder Nahrungsmittel, mit einem Gefässverschluss gemäß einem der vorstehenden Ansprüche.

## Claims

1. Vessel closure made of metal or plastic for a vessel for holding food or beverages, with a sealing insert made of a sealing material which comprises at least one polymer in a mixture with further substances, wherein
- the vessel closure is embodies as a screw cap for a bottle, a glass or the like,
- and in the closed state demonstrates vacuum retention,
- the sealing material contains no PVC and essentially no cross-linked polymers;
- relative to the total weight of the sealing material, the sealing material comprises between 20% and 50% SEES and up to 25% LLDPE; between 10% and 50% PP, and/or between 10% and 50% PP-based polymer, and at least one oil component,
- the oil component content is up to 35%, and
- the sealing insert is sterilisable.

2. Vessel closure according to Claim 1, in which the sealing insert is arranged inside the vessel closure in such manner that in the closed state it fits in sealing manner on the vessel opening, wherein the vessel closure if preferably made of metal.

3. Vessel closure according to one of Claims 1 or 2, **characterized in that** the vessel closure corresponds to an inner diameter of the vessel opening of more than 2.5 cm, preferably more than 3 cm, more preferably at least 3.5 cm, particularly preferably at least 3.8 cm and optionally more than 4 cm.

4. Vessel closure according to any one of Claims 1 to 3, in which the vessel closure is a lug twist closure, a Press-on Twist-off@ closure, a snap-on lid, a crimp-on or one-time closure (e.g., Pano AK) or a roll-on metal closure.

5. Vessel closure according to any one of the preceding claims, **characterized in that** the sealing insert is embodied as an inner insert on the inner surface and, in the case of Press-on Twist-off@ closures, also on the skirt of the vessel closure ("contoured ring").

6. Vessel closure according to Claim 5, **characterized in that** the sealing insert is embodied in the form of a ring or circular disc.

7. Vessel closure according to any one of the preceding claims, **characterized in that** the sealing material is embodied such that the sealing insert is usable in a heat treatment (with or without pressure) of the filled vessel for the purpose of sterilisation (above 98°C, preferably above 105°C, particularly preferably above 120°C and especially between 121°C and 132°C).

8. Vessel closure according to any one of the preceding claims, **characterized in that** in the closed state the vessel closure has a gas barrier effect and/or an overpressure valve effect.

9. Vessel closure according to any one of Claims 1 to 8, in which the sealing material is selected such that the closure fulfils the specifications of Regulation (EC) 1935/2004.

10. Vessel closure according to any one of Claims 1 to 9, in which the sealing material is selected such that the closure fulfils the specifications of Regulation (EC) 2023/2006.

11. Vessel closure according to any one of Claims 1 to 10, in which the sealing material is selected such that the closure fulfils the specifications of EC Directive 2002/72/EC.

12. Vessel closure according to any one of Claims 1 to 11, in which the sealing material is selected such that the closure fulfils the specifications of Regulation (EU) 10/2011.

13. Vessel closure according to one of the preceding claims, wherein the sealing material contains not more than 50%, preferably not more than 35%, in particular not more than 20% of components that are liquid at the application temperature.

14. Vessel closure according to any one of the preceding claims, in which the sealing material does not contain any plasticisers, in particular no phthalates.

15. Vessel closure according to any one of the preceding claims, in which in the compression set test similar to ASTM D395-97 method B at 22 h/70°C the sealing material demonstrates a compression set (CS) of 50-70%.

16. Vessel closure according to any one of the preceding claims, **characterized in that** the sealing material contains between 20 and 60% of at least one block copolymer, the block copolymer preferably being a copolymer of ethylene with a C3-C20 alpha-olefin, optionally in combination with other unsaturated monomers.

17. Vessel closure according to Claim 16, **characterized in that** the block copolymer is formed from ethylene and an alkene, in particular selected from propene, butene, hexene and octene, and particularly preferably octene.

18. Vessel closure according to Claims 15 to 17, **characterized in that** the sealing material contains between 0.1% and 80%, preferably between 20 and 60%, particularly preferably between 40 and 50%, of at least one random copolymer, the random copolymer preferably being a linear interpolymer of ethylene and a C3-C20 alpha olefin or a branched interpolymer of ethylene and a C3-C20-alpha olefin.

19. Vessel closure according to Claim 18, **characterized in that** the random copolymer has a density of 0.80 to 1.1 g/cm3 and preferably a melt flow index (MFI) of 0.15 g/10 min to 100g/10 min.

20. Vessel closure according to any one of Claims 15 to 19, **characterized in that** the random copolymer comprises two alkenes, selected in particular from ethylene, propene, butene, hexene and octene.

21. Vessel closure according to Claim 20, in which at least one copolymer has been produced by metallocene catalysis.

22. Vessel closure according to any one of claims 15 to 21, **characterized in that** the composition contains up to 50%, in particular up to 25% polyolefins, preferably HDPE and/or PP or (co)PP, and preferably comprises at least one propylene-based polymer which has a melting range above 90°C.

23. Vessel closure according to Claim 1, in which the sealing material contains between 5% and 70% SEES and between 10% and 50% of a propylene (co)polymer.

24. Vessel closure according to Claim 22 or Claim 23, in which the sealing material comprises metallocene-catalysed PP or Homo-PP.

25. Vessel closure according to any one of the preceding claims, in which the sealing material contains less than 30 wt%>, preferably less than 20% wt%>, more preferably less than 10 wt%>, particularly preferably less than 5 wt%> crosslinked polymers relative to the total weight thereof, and especially no crosslinked polymer at all.

26. Vessel closure according to any one of the preceding claims, with a content of a polyester in the sealing material.

27. Sealing insert for a vessel closure, comprising a sealing material according to any one of Claims 1 to 26.

28. Vessel, in particular screw-capped glass, for beverages or food, with a vessel closure according to any one of the preceding claims.

## Revendications

1. Fermeture de récipient, en métal ou en matière plastique pour un récipient destiné à recevoir des produits alimentaires ou des boissons, pourvue d'un insert d'étanchéité en une matière d'étanchéité, qui comprend au moins un polymère, mélangé à d'autres substances,
- la fermeture de récipient étant conçue sous la forme d'un couvercle à visser pour une bouteille, un verre ou analogues,
- et en position fermée, faisant preuve d'une rétention de vide,
- la matière d'étanchéité ne contenant pas de PVC et sensiblement aucun polymère réticulé ;
- la matière d'étanchéité comprenant, en rapport au poids total de la matière d'étanchéité entre 20 % et 50 % de SEBS, et de jusqu'à 25 % de LLDPE ; entre 10 % et 50 % de PP, et / ou entre 10 % et 50 % d'élastomère à base de PP et au moins un composant huileux,
- la teneur en composant huileux s'élevant à jusqu'à 35 % et
- l'insert d'étanchéité étant stérilisable,

2. Fermeture de récipient selon la revendication 1, dans laquelle l'insert d'étanchéité est placé dans la fermeture de récipient de telle sorte qu'en position fermée, il soit adjacent à l'ouverture du récipient, en assurant l'étanchéité, la fermeture de récipient étant de préférence en métal.

3. Fermeture de récipient selon l'une quelconque des revendications 1 ou 2, **caractérisée en ce que** la fermeture de récipient correspond à un diamètre interne de l'ouverture de récipient de plus de 2,5 cm, de préférence de plus de 3 cm, de manière préférentielle, d'au moins 3,5 cm, de manière particulièrement préférentielle, d'au moins 3,8 cm et le cas échéant, de plus de 4 cm.

4. Fermeture de récipient selon l'une quelconque des revendications 1 à 3, pour laquelle, la fermeture de récipient est une fermeture tournante à came, une fermeture Press-an Twist-off@, un couvercle cloche, une fermeture à sertissage ou une fermeture à usage unique (par ex. Pano AK) ou une fermeture métallique par engagement roulant.

5. Fermeture de récipient selon l'une quelconque des revendications précédentes, **caractérisée en ce que** l'insert d'étanchéité est conçu sous la forme d'un insert interne sur la surface interne, et sur les fermetures Press-an Twist-off@ est également conçu sur la jupe de la fermeture de récipient (« bague profilée »).

6. Fermeture de récipient selon la revendication 5, **caractérisée en ce que** l'insert d'étanchéité est conçu de forme annulaire ou en forme de disque circulaire.

7. Fermeture de récipient selon l'une quelconque des revendications précédentes, **caractérisée en ce que** la matière d'étanchéité est conçue de telle sorte que l'insert d'étanchéité soit utilisable lors d'un traitement thermique (avec ou sans pression) du récipient rempli, à des fins de stérilisation (au-delà de 98 °C, de préférence au-delà de 105 °C, de manière particulièrement préférentielle, au-delà de 120 °C et spécialement entre 121 °C et 132 °C).

8. Fermeture de récipient selon l'une quelconque des revendications précédentes, **caractérisée en ce qu'**en position fermée, la fermeture de récipient présente un effet de barrière au gaz et / ou un effet de soupape de surpression.

9. Fermeture de récipient selon l'une quelconque des revendications 1 à 8, dans laquelle la matière d'étanchéité est sélectionnée de telle sorte que la fermeture satisfasse aux dispositions du règlement (CE) 1935/2004.

10. Fermeture de récipient selon l'une quelconque des revendications 1 à 9, dans laquelle la matière d'étanchéité est sélectionnée de telle sorte que la fermeture satisfasse aux dispositions du règlement (CE) 2023/2006.

11. Fermeture de récipient selon l'une quelconque des revendications 1 à 10, dans laquelle la matière d'étanchéité est sélectionnée de telle sorte que la fermeture satisfasse aux dispositions de la directive CE 2002/72/CE.

12. Fermeture de récipient selon l'une quelconque des revendications 1 à 11, dans laquelle la matière d'étanchéité est sélectionnée de telle sorte que la fermeture satisfasse aux dispositions du règlement (UE) 10/2011.

13. Fermeture de récipient selon l'une quelconque des revendications précédentes, la matière d'étanchéité ne contenant pas plus de 50 %, de préférence pas plus de 35 %, notamment pas plus de 20 % de composants liquides à température d'utilisation.

14. Fermeture de récipient selon l'une quelconque des revendications précédentes, dans laquelle la matière d'étanchéité ne contient pas de plastifiants, notamment pas de phtalates.

15. Fermeture de récipient selon l'une quelconque des revendications précédentes, dans laquelle, lors de l'essai de déformation à la compression analogue à ASTM D395-97 méthode B, la matière d'étanchéité fait preuve en 22 h / 70°C d'une déformation permanente (DVR) de 50 à 70 %.

16. Fermeture de récipient selon l'une quelconque des revendications précédentes, **caractérisée en ce que** la matière d'étanchéité contient entre 20 et 60 % d'au moins un copolymère séquencé, le copolymère séquencé étant de préférence un copolymère de l'éthylène avec une-alpha-oléfine en C₃ à C₂₀, le cas échéant, en association avec d'autres monomères insaturés.

17. Fermeture de récipient selon la revendication 16, **caractérisée en ce que** le copolymère séquencé est conçu en éthylène et en un alcène, sélectionné notamment parmi le propène, le butène, l'hexène et l'octène et de manière particulièrement préférentielle, en octène.

18. Fermeture de récipient selon les revendications 15 à 17, **caractérisée en ce que** la matière d'étanchéité contient entre 0,1 % et 80 %, de préférence entre 20 et 60 %, de manière particulièrement préférentielle entre 40 et 50 % d'au moins un copolymère aléatoire, le copolymère aléatoire étant de préférence un interpolymère linéaire de l'éthylène et d'une alpha-oléfine en C₃ à C₂₀ ou un interpolymère branché de l'éthylène et d'une alpha-oléfine en C₃ à C₂₀.

19. Fermeture de récipient selon la revendication 18, **caractérisée en ce que** le copolymère aléatoire présente une densité de 0,80 à 1, 1 g/cm³ et de préférence un indice de fusion (MFI) de 0.15 g/10 min à 100 g/ 10 min.

20. Fermeture de récipient selon l'une quelconque des revendications 15 à 19, **caractérisée en ce que** le copolymère aléatoire comprend deux alcènes, sélectionnés notamment parmi l'éthylène, le propène, le butène, l'hexène et l'octène.

21. Fermeture de récipient selon la revendication 20, dans laquelle au moins un copolymère a été produit par catalyse au métallocène.

22. Fermeture de récipient selon l'une quelconque des revendications 15 à 21, **caractérisée en ce que** la composition contient jusqu'à 50 %, notamment jusqu'à 25 % de polyoléfines, de préférence de HDPE et / ou de PP ou de (co)PP, et comprend de préférence au moins un polymère sur base de propylène, qui dispose d'un intervalle de fusion supérieur à 90 °C.

23. Fermeture de récipient selon la revendication 1, dans laquelle la matière d'étanchéité contient entre 5 % et 70 % de SEBS et entre 10 % et 50 % d'un(co)polymère de propylène.

24. Fermeture de récipient selon la revendication 22 ou la revendication 23, dans laquelle la matière d'étanchéité comprend du PP ou de l'homo PP catalysé au métallocène.

25. Fermeture de récipient selon l'une quelconque des revendications précédentes, dans lequel la matière d'étanchéité contient, en rapport à son poids total moins de 30 % en poids>, de préférence moins de 20 % en poids>, de manière plus préférentielle, moins de 10 % en poids>, de manière particulièrement préférentielle, moins de 5 % en poids et spécialement aucun polymère réticulé.

26. Fermeture de récipient selon l'une quelconque des revendications précédentes, avec une teneur en un polyester dans la matière d'étanchéité.

27. Insert d'étanchéité pour une fermeture de récipient, comprenant une matière d'étanchéité selon l'une quelconque des revendications 1 à 26.

28. Récipient, notamment, bocal à couvercle vissé, destiné à des boissons ou à des produits alimentaires, pourvu d'une fermeture de récipient selon l'une quelconque des revendications précédentes.
